## Europäisches Patentamt

## European Patent Office

## Office européen des brevets

(19)

(11) Veröffentlichungsnummer: **0 016 335
B1**

(12) **EUROPÄISCHE PATENTSCHRIFT**

(45) Veröffentlichungstag der Patentschrift:
**19.10.83**

(21) Anmeldenummer: **80100745.1**

(22) Anmeldetag: **14.02.80**

(51) Int. Cl.³: **H 02 G 3/22,** E 04 C 1/39,
F 16 L 5/02, F 16 L 9/20,
E 04 F 17/08

(54) **Vorrichtung für die Einführung von Installationsleitungen in ein Gebäude.**

(30) Priorität: **23.03.79 DE 7908147 U**

(43) Veröffentlichungstag der Anmeldung:
**01.10.80 Patentblatt 80/20**

(45) Bekanntmachung des Hinweises auf die Patenterteilung:
**19.10.83 Patentblatt 83/42**

(84) Benannte Vertragsstaaten:
**BE DE FR GB LU NL SE**

(56) Entgegenhaltungen:
**DE-A-1 965 728
DE-A-2 732 093
FR-A-2 063 375
GB-A-576 667
US-A-4 031 919**

(73) Patentinhaber: **Ellrott, Egon, Blumenthalstrasse 9,
D-2800 Bremen (DE)**

(72) Erfinder: **Ellrott, Egon, Blumenthalstrasse 9,
D-2800 Bremen (DE)**

(74) Vertreter: **Bolte, Erich, Dipl.-Ing., Hollerallee 73,
D-2800 Bremen (DE)**

Vorrichtung für die Einführung von Installationsleitungen in ein Gebäude

Die Erfindung betrifft eine Vorrichtung für die Durchführung mehrerer Installationsleitungen und -rohre durch eine Gebäudedecke mittels eines vorgefertigten dreidimensionalen Tragkörpers, der an der Gebäudedecke anbaubar ist und in den Leerrohrabschnitte in festgelegter Relativstellung zueinander eingebaut sind.

Bei Hochbauten, insbesondere bei Wohnbauten, stellt sich die Aufgabe, von außen ankommende Leitungen, Rohre etc. in geeigneter Weise in das Gebäude einzuführen. Bisher ist es üblich, unterhalb der Sohle des Gebäudes (Kellerplatte oder Bodenplatte bei nicht unterkellerten Gebäuden) Leerrohrstücke für die in Betracht kommenden Installationseinrichtungen anzuordnen und diese in die Bodenplatte sowie gegebenenfalls in eine außen in den Boden eingelassene Frostschürze aus Beton einzubetten.

Die dabei verwendeten Leerrohrstücke haben überwiegend gleichen Durchmesser und sind mehr oder weniger ungeordnet und unsystematisch in diesem Bereich des Eintritts von außen in das Gebäude angeordnet. Die Folge davon ist, daß in der Praxis die betreffenden Leerrohrstükke nicht in einer für den betreffenden Installationsstrang erforderlichen oder erwünschten Relativstellung liegen. Weiterhin muß häufig beobachtet werden, daß die bestimmten Installationen zugeordneten Leerrohrstücke verwechselt und demnach nicht ordnungsgemäß verwendet werden. Auch ist der Einbau mit einem erheblichen Aufwand verbunden. Schließlich liegen die Installationsleitungen selbst im Bereich zwischen Forstschürze und Sohle frei.

Aus der DE-A-2 732 093 ist bereits ein Tragkörper (Vollkörper) bekannt, in den Rohrleitungsstücke bzw. Durchführungen eingebettet sind. Hierdurch werden jedoch nicht die spezifischen Probleme, wie sie bei der Einführung von Installationsleitungen und -rohren in ein nicht unterkellertes Gebäude entstehen, gelöst.

Der Erfindung liegt die Aufgabe zugrunde, den bekannten Tragkörper so umzugestalten, daß er die aufgezeigten, beim Bau nicht unterkellerter Gebäude entstehenden Probleme beseitigen kann, damit Montage- und Einbauaufwand an Ort und Stelle bei der Errichtung des Bauwerks sich beträchtlich vermindern und darüber hinaus eine exakte, genau eingehaltene Relativlage der Leerrohrstücke gewährleistet ist.

Zur Lösung dieser Aufgabe ist die Erfindung durch folgende Merkmale gekennzeichnet:

a) Der Tragkörper ist ein zwischen der Frostschürze und der Bodenplatte eines nicht unterkellerten Gebäudes einpaßbares Rahmentragwerk, mit einer im Einbauzustand an der Frostschürze anliegenden vertikalen Eintrittsseite und einer sich hieran in einem Winkel von 90° anschließenden, in die Bodenplatte einbetonierbaren, horizontalen Austrittsseite,

b) die Leerrohrabschnitte sind im Rahmentragwerk an entsprechenden Stellen durch Halterungen (Rohrschellen) fixiert, erstrekken sich schräg oder bogenförmig von der Eintrittsseite zu der Austrittsseite und weisen eine derartige Länge auf, daß sie im eingebauten Zustand sowohl von außen durch die Frostschürze als auch durch die Bodenplatte sowie deren Auflageschichten nach innen hindurchtreten.

Die Erfindung verläßt demnach das System des Einbaus einzelner Leerrohrstücke in die Bodenplatte und/oder die Frostschürze. Statt dessen wird eine gegebenenfalls fabrikmäßig vorgefertigte Halterung zur Aufnahme von ausgewählten, zugeordneten Leerrohrabschnitten als insgesamt einbaubare Einheit geschaffen.

Die vorgenannte Halterung ist vorzugsweise als dreidimensionales Rahmentragwerk aus Kunststoff- oder Metallprofilen hergestellt, worin die Leerrohrabschnitte individuell befestigt sind.

Im Rahmentragwerk sind die Leerrohrabschnitte derart verankert, daß sie eintrittsseitig und austrittsseitig jeweils mit einem Ende herausragen. Dieses Ende ist so bemessen, daß es auch durch die anschließenden Bauteil des Bauwerks (Bodenplatte bzw. Frostschürze) hindurchzutreten vermag.

Die erfindungsgemäße Einheit aus Rahmentragwerk und Leerrohrabschnitten wird vor dem Betonieren der Sohle bzw. Platte sowie einer eventuellen Außenwand oder aufrechten Frostschürze in eine entsprechende Vertiefung des Bodens eingelassen, derart, daß die Austrittsenden nach oben, die Eintrittsseiten zur Seite gerichtet sind. Es können dann die Betonierarbeiten erfolgen, durch die zugleich die Rohrenden mit einbetoniert werden.

Die Leerrohrabschnitte sind erfindungsgemäß in dem Rahmentragwerk durch Rohrschellen fixiert, die ihrerseits mit dem Rahmentragwerk verbunden sind. Des weiteren kann der Innenraum des dreidimensionalen Rahmentragwerks mit einer Füllmasse, insbesondere mit Beton, ausgefüllt sein.

Weitere Merkmale der Erfindung beziehen sich auf die konstruktive Ausgestaltung des Rahmentragwerks sowie auf eine besondere Relativanordnung und Gestaltung der Leerrohrabschnitte in dem Rahmentragwerk.

Weitere Merkmale und Einzelheiten der Erfindung werden nachfolgend anhand eines in den Zeichnungen dargestellten Ausführungsbeispiels näher erläutert. Es zeigt

Fig. 1 das eingebaute Rahmentragwerk, zum Teil mit Installationseinrichtungen, in Seitenansicht,

Fig. 2 eine Draufsicht auf das Rahmentragwerk,

Fig. 3 eine Seitenansicht des Rahmentragwerkes.

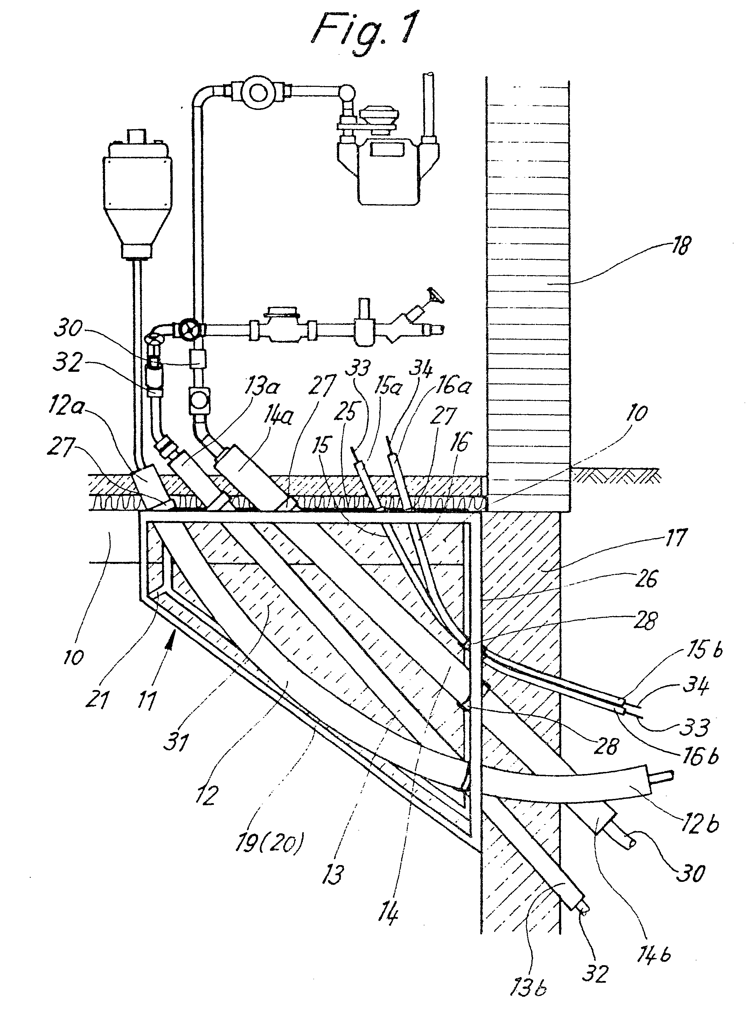

In Fig. 1 ist ein mögliches Installationsbeispiel für ein Einfamilienhaus oder dergleichen gezeigt, welches hier ohne Keller ausgeführt ist. Im seitlichen Bereich eines Raumes zur Aufnahme der Installationsanschlüsse ist unterhalb einer Bodenplatte 10 ein Rahmentragwerk 11 als Halterung für eine Mehrzahl von Leerrohrabschnitten 12, 13, 14, 15 und 16 angeordnet. Das Rahmentragwerk 11 ist mit den Leerrohrabschnitten 12 ... 16 in eine entsprechende Vertiefung des Bodens unterhalb der Bodenplatte 10 eingelassen. Zur Seite, nämlich nach außen weisend, schließt an das Rahmentragwerk 11 eine aufrechte Frostschürze 17 etwa in Verlängerung von aufgehendem Mauerwerk 18 des Gebäudes an.

Das Rahmentragwerk 11 weist im vorliegenden Fall in Seitenansicht eine etwa trapezförmige Gestalt auf. Die Umrisse und Abmessungen des Rahmentragwerks 11 sind demnach so gewählt, daß entsprechend der Anzahl und Anordnung der Leerrohrabschnitte 12 ... 16 kein Freiraum verbleibt.

Das Rahmentragwerk 11 besteht im vorliegenden Fall aus zwei seitlichen, geschlossenen, nämlich hier trapezförmigen Rahmen 19 und 20. Diese bestehen beispielsweise aus handelsüblichen Profilen, insbesondere Winkelprofilen, die durch Schweißung miteinander verbunden sind. Die beiden Rahmen 19, 20 werden durch eine den statischen Anforderungen entsprechende Anzahl von Querstreben 21, 22, 23, 24 miteinander verbunden, die zweckmäßigerweise ebenfalls aus Winkelprofilen bestehen. Die Querstreben 21 ... 24 sind hier jeweils an den vier Ecken des Rahmentragwerks 11 bzw. der Rahmen 19, 20 angeordnet.

Die Anordnung des Rahmentragwerks 11 ist derart getroffen, daß der obere Bereich des Rahmentragwerks 11 in die Bodenplatte 10 einbetoniert ist. Eine im wesentlichen horizontale Austrittsseite 25 des Rahmentragwerks 11 liegt etwa bündig mit der Oberseite der Bodenplatte 10. Darüber befinden sich in üblicher Weise Isolierung, Estrich und sonstige Lagen einer Bodenplatte eines Gebäudes.

Seitlich schließt das Rahmentragwerk 11 an die aufrechte Frostschürze 17 an, und zwar derart, daß eine im wesentlichen aufrechte Eintrittsseite 26 an der Innenseite dieser Frostschürze 17 Anlage erhält.

Die Leerrohrabschnitte 12 ... 16 laufen durch das Rahmentragwerk 11 hindurch, und zwar von der Eintrittsseite 26 schräg und/oder bogenförmig zur Austrittsseite 25. Die Längsachsen der Leerrohrabschnitte 12 ... 16 sind demnach jeweils unter einem Winkel zur Austrittsseite 25 und Eintrittsseite 26 gerichtet. Die Leerrohrabschnitte 12 ... 16 sind weiterhin so in dem Rahmentragwerk 11 verankert, daß beidendig Rohrenden 12a, 12b; 13a, 13b ... 16a, 16b aus dem Rahmentragwerk 11 herausragen, aber auch durch die jeweils anschließenden Bauwerksteile, nämlich die auf der Bodenplatte 10 aufliegenden Schichten sowie durch die Frostschürze 17 hindurchtreten.

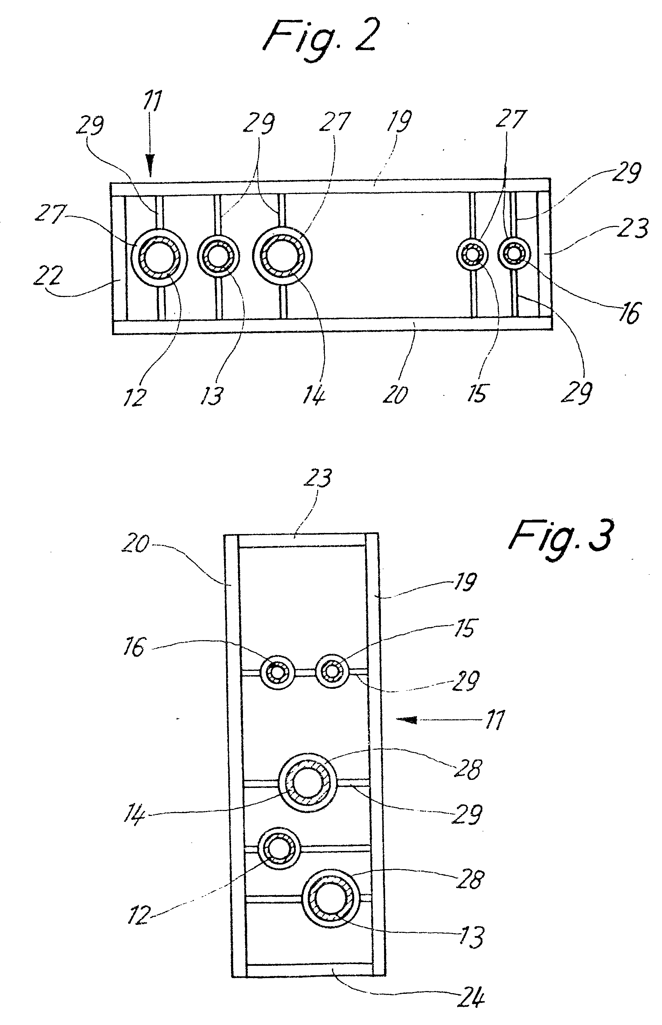

Die Leerrohrabschnitte 12 ... 16 können in verschiedener Weise in dem Rahmentragwerk 11 unter Bildung einer Einheit mit diesem verankert sein. Bei dem vorliegenden Ausführungsbeispiel sind die Leerrohrabschnitte 12 ... 16 jeweils im Bereich der Austrittsseite 25 und der Eintrittsseite 26 durch Rohrschellen 27 und 28 mit dem Rahmentragwerk 11 verbunden, und zwar durch seitwärts gerichtete Stege 29, die an den seitlichen Rahmen 19, 20 angeschweißt sein können. Die Rohrschellen 27, 28 sind dabei so fixiert, daß die Leerrohrabschnitte 12 ... 16 in einer bestimmten, funktionsgerechten Relativanordnung liegen und diese folglich beibehalten. Im Bereich der Austrittsseite 25 (Fig. 2) sind alle Leerrohrabschnitte 12 ... 16 etwa in der Längsmittelebene des Rahmentragwerks 11 bzw. mittig zwischen den beiden Rahmen 19 und 20 verankert. Dadurch kann das Rahmentragwerk 11 nicht seitenverkehrt eingebaut werden. Im Bereich der Eintrittsseite 26 sind die Leerrohrabschnitte 12 ... 16 bzw. deren Rohrenden ungleichförmig verteilt. Hier kommt es darauf an, welche Einbautiefen nach den einzuführenden Installationsleitungen erforderlich sind. Im vorliegenden Beispiel ist die Anordnung so getroffen, daß das Leerrohr 12 zur Aufnahme von Elektroversorgungsleitungen mit einem großzügigen Bogen entlang der unteren, äußeren Begrenzung des Rahmentragwerks 11 verläuft, derart, daß dieser Leerrohrabschnitt 12 am äußeren Randbereich der Austrittsseite 25 das Rahmentragwerk 11 verläßt, im Bereich der Eintrittsseite 26 im unteren Bereich — unter Beachtung der Frosttiefe — eintritt. Das Rohrende 12b ist hier nahezu horizontal gerichtet.

Der Leerrohrabschnitt 13 für die Aufnahme einer Wasserleitung 32 erstreckt sich vom untersten Bereich der Eintrittsseite 26 geradlinig diagonal durch das Rahmentragwerk 11 hindurch zur Austrittsseite 25. In gleicher Weise, jedoch darüberliegend, ist der Leerrohrabschnitt 14 für eine Gasleitung 30 montiert. Die im Verhältnis dazu erheblich dünneren Leerrohrabschnitte 15 für Postleitungen 33 sowie 16 für eine Antenne 34 sind demgegenüber eintrittsseitig etwa nebeneinanderliegend in einer Ebene befestigt, verlassen jedoch das Rahmentragwerk 11 an der Austrittsseite 25 mit Abstand in der Längsmittelebene voneinander.

Die Leerrohrabschnitte 12 ... 16 können durch eine zusätzliche Füllmasse 31, die den Raum des Rahmentragwerks 11 ausfüllt, verankert und geschützt sein. Hierbei kann es sich um an Ort und Stelle eingefüllten Beton handeln. Die Füllmasse kann aber auch Kunststoff, zum Beispiel Schaumkunststoff, sein.

**Patentansprüche**

1. Vorrichtung für die Durchführung mehrerer Installationsleitungen und -rohre durch eine Gebäudedecke mittels eines vorgefertigten dreidimensionalen Tragkörpers, der an der Gebäudedecke anbaubar ist und in den Leerrohrabschnitte (12 ... 16) in festgelegter Relativstellung zueinander eingebaut sind, gekennzeichnet durch die folgenden Merkmale:

a) der Tragkörper ist ein zwischen der Frostschürze (17) und der Bodenplatte (10) eines nicht unterkellerten Gebäudes einpaßbares Rahmentragwerk (11), mit einer im Einbauzustand an der Frostschürze (17) anliegenden vertikalen Eintrittsseite (26) und einer sich hieran in einem Winkel von 90° anschließenden, in die Bodenplatte (10) einbetonierbaren, horizontalen Austrittsseite (25),

b) die Leerrohrabschnitte (12 ... 16) sind im Rahmentragwerk (11) an entsprechenden Stellen durch Halterungen (Rohrschellen 27, 28) fixiert, erstrecken sich schräg oder bogenförmig von der Eintrittsseite (26) zu der Austrittsseite (25) und weisen eine derartige Länge auf, daß sie im eingebauten Zustand sowohl von außen durch die Frostschürze (17) als auch durch die Bodenplatte (10) sowie deren Auflageschichten nach innen hindurchtreten.

2. Vorrichtung nach Anspruch 1, dadurch gekennzeichnet, daß das Rahmentragwerk (11) aus Metall- oder Kunststoffprofilen besteht, insbesondere aus zwei im Abstand voneinander angeordneten Rahmen (19, 20), die durch Querverbindungen, insbesondere Querstreben (21, 22, 23, 24) miteinander verbunden sind, wobei die Leerrohrabschnitte (12 ... 16) zwischen den Rahmen (19, 20) montiert sind.

3. Vorrichtung nach Anspruch 1 oder 2, dadurch gekennzeichnet, daß sich die Leerrohrabschnitte (12 ... 16) zwischen der Eintrittsseite (26) und der Austrittsseite (25) bogenförmig und/oder geradlinig erstrecken.

4. Vorrichtung nach Anspruch 1 sowie einem oder mehreren der weiteren Ansprüche, dadurch gekennzeichnet, daß die Leerrohrabschnitte (12 ... 16) durch Rohrschellen (27, 28) seitlich mit dem Rahmentragwerk (11) bzw. dem Rahmen (19, 20) verbunden sind.

5. Vorrichtung nach einem der Ansprüche 1 bis 4, dadurch gekennzeichnet, daß die Leerrohrabschnitte (12 ... 16) in einer Längsmittelebene des Rahmentragwerks (11) verteilt angeordnet sind, derart, daß sie im Bereich der Austrittsseite (25) und/oder der Eintrittsseite (26) mit Abstand voneinander liegen.

6. Vorrichtung nach Anspruch 5, dadurch gekennzeichnet, daß die Leerrohrabschnitte (12 ... 16) ungleichförmig verteilt verankert sind, insbesondere im unteren Bereich des Rahmentragwerks (11) liegend.

7. Vorrichtung nach Anspruch 6 sowie einem oder mehreren der weiteren Ansprüche, dadurch gekennzeichnet, daß im Bereich der Eintrittsseite (26) Leerrohrabschnitte (12, 13) für Elektroversorgung sowie Wasserleitung (32) im unteren Bereich des Rahmentragwerks (11) verankert sind, der Leerrohrabschnitt (14) für eine Gasleitung (30) darüberliegend und Leerrohrabschnitte (15, 16) für Postleitungen (33) und Antenne (34) über diesen.

8. Vorrichtung nach einem oder mehreren der Ansprüche 1 bis 7, dadurch gekennzeichnet, daß der Leerrohrabschnitt (12) für die Elektroversorgung insgesamt bogenförmig ausgebildet ist, Leerrohrabschnitte (13 bzw. 14) hingegen geradlinig schräg durch das Rahmentragwerk (11) hindurchtreten.

**Claims**

1. Apparatus for passing several installation lines and pipes through the ceiling of a building by means of a prefabricated, three-dimensional supporting body, which can be attached to said ceiling and into which are incorporated empty pipe sections (12 ... 16) in a fixed relative position to one another, characterized by the following features:

a) the supporting body is a frame supporting structure (11) which can be fitted between the frost guard (17) and the base plate (10) of a non-cellared building, with a vertical entrance side (26) engaging on the frost guard (17) in the installed state and a horizontal exit side (25) following on to the same at an angle of 90° and which can be concreted into the base plate (10),

b) the empty pipe sections (12 ... 16) are fixed in the frame supporting structure (11) at corresponding points by means of fastenings (pipe brackets 27, 28), extend in a sloping or curved manner form the entrance side (26) to the exit side (25) and have such a length that in the installed state pass inwards from the outside through the frost guard (17) and through the base plate (10), as well as through the support layers thereof.

2. Apparatus according to claim 1, characterized in that the frame supporting structure (11) comprises metal or plastic profiles, particularly two spaced frames (19, 20) which are joined by cross connections, particularly cross struts (21, 22, 23, 24), the empty pipe sections (12 ... 16) being fitted between the frames (19, 20).

3. Apparatus according to claim 1 or 2, characterized in that the empty pipe sections (12 ... 16) extend in curved and/or linear manner between entrance side (26) and exit side (25).

4. Apparatus according to claim 1, as well as one or more of the other claims, characterized in that the empty pipe sections (12 ... 16) are laterally joined to the frame supporting structure (11) and/or frame (19, 20) by pipe brackets (27, 28).

5. Apparatus according to one of the claims 1 to 4, characterized in that the empty pipe sections (12 ... 16) are distributed in a median longitudinal plane of the frame supporting structure (11) in such a way that they are spaced from one another in the vicinity of the exit side (25) and/or the entrance side (26).

6. Apparatus according to claim 5, characterized in that the empty pipe sections (12 ... 16) are anchored in non-uniformly distributed manner, particularly located in the lower area of the frame supporting structure (11).

7. Apparatus according to claim 6, as well as one or more of the further claims, characterized in that in the vicinity of the entrance side (26), empty pipe sections (12, 13) are anchored in the lower area of the frame supporting structure (11) for the electrical power supply and water mains (32), whilst the empty pipe section (14) for the gas main (30) is positioned above this and empty pipe sections (15, 16) for telephone lines (33) and antenna (34) are positioned above the latter.

8. Apparatus according to one or more of the claims 1 to 7, characterized in that the empty pipe section (12) for the electricity power supply is curved, whereas the empty pipe sections (13 or 14) pass in linear sloping manner through the frame supporting structure (11).

**Revendications**

1. Dispositif pour le passage de plusieurs canalisations d'installations à travers un plancher de bâtiment, au moyen d'un corps support à trois dimensions préfabriqué qui peut être appliqué contre le plancher de bâtiment et dans lequel des morceaux de tube vides (12 à 16) sont montés dans des positions relatives fixées, caractérisé par le fait que:

a) le corps support est un bâti (11) qui peut être encastré entre le tablier antigel (17) et la dalle de sol (10) d'un bâtiment sans sous-sol et présente une face d'entrée verticale (26) appuyée, en oeuvre, contre le tablier antigel (17), et une face de sortie horizontale (25) adjacente à elle pouvant être scellée dans le béton de la dalle de sol (10),

b) les morceaux de tube vides (12 à 16) sont fixés dans le bâti (11) à des endroits appropriés, au moyen d'éléments de fixation (colliers 27, 28), s'étendent en oblique ou suivant un arc de la face d'entrée (26) à la face de sortie (25) et ont une longueur telle qu'en oeuvre, ils traversent de l'extérieur le tablier antigel (17) et, vers l'intérieur, la dalle de sol (10) et les couches qui la recouvrent.

2. Dispositif selon la revendication 1, caractérisé par le fait que le bâti (11) est constitué de profilés métalliques ou en matière plastique, en particulier de deux cadres (19, 20) placés à une certaine distance l'un de l'autre et réunis par des liaisons transversales, en particulier par des traverses (21, 22, 23, 24), les morceaux de tube vides (12 à 16) étant montés entre ces cadres (19, 20).

3. Dispositif selon l'une des revendications 1 et 2, caractérisé par le fait que les morceaux de tube vides (12 à 16) s'étendent entre la face d'entrée (26) et la face de sortie (25) suivant un arc et/ou en ligne droite.

4. Dispositif selon la revendication 1 et une ou plusieurs des autres revendications, caractérisé par le fait que les morceaux de tube vides (12 à 16) sont attachés sur le côté au bâti (11) ou au cadre (19, 20) par des colliers (27, 28).

5. Dispositif selon l'une des revendications 1 à 4, caractérisé par le fait que les morceaux de tube vides (12 à 16) sont placés de façon répartie dans le plan médian longitudinal du bâti (11), de façon telle qu'ils soient écartés les uns des autres dans la zone de la face de sortie (25) et/ou la zone de la face d'entrée (26).

6. Dispositif selon la revendication 5, caractérisé par le fait que les morceaux de tube vides (12 à 16) sont ancrés, inégalement répartis, en particulier dans la partie inférieure du bâti (11).

7. Dispositif selon la revendication 6 et une ou plusieurs des autres revendications, caractérisé par le fait que, dans la zone de la face d'entrée (26), des morceaux de tube vides (12, 13) pour l'alimentation électrique et pour une canalisation d'eau (32) sont ancrés dans la partie inférieure du bâti (11), le morceau de tube vide (14) pour une canalisation de gaz (30) est ancré au-dessus et des morceaux de tube vides (15, 16) pour des câbles téléphoniques (33) et une antenne (34) sont ancrés au-dessus de ceux-ci.

8. Dispositif selon une ou plusieurs des revendications 1 à 7, caractérisé par le fait que le morceau de tube vide (12) pour l'alimentation électrique est en totalité arqué, tandis que les morceaux de tube vides (13, 14) traversent en ligne droite, en oblique, le bâti (11).

# Fig. 1

# Fig. 2

# Fig. 3